# EUROPÄISCHE PATENTANMELDUNG

(11) **EP 2 256 749 A1**
(43) Veröffentlichungstag der Anmeldung: **01.12.2010**
(21) Anmeldenummer: 09161294.5
(22) Anmeldetag: 27.05.2009
(51) Int. Cl.: G21F 5/08, F16F 7/12

(54) **Stoßdämpfungsvorrichtung für Transport-/Lagerbehälter von radioaktivem Material**

(71) Anmelder: Evonik Energy Services GmbH, 45128 Essen (DE)
(72) Erfinder: Krüper, Andreas, 44627 Herne (DE); Nierhaus, Thomas, 45472 Mülheim an der Ruhr (DE); Stratmann, Werner, 44532 Lünen (DE)
(74) Vertreter: Zenz

(57) **Zusammenfassung**

Bei einer Stoßdämpfungsvorrichtung (1) für Transport- und/oder Lagerbehälter von radioaktivem Material, die eine einen Aufnahmeraum (3) umgrenzende Rahmenstruktur (2, 2a, 2b) aufweist, soll eine Lösung geschaffen werden, durch die auf einfache konstruktive Weise die bei einem Behälterabsturz auftretende Energie mit einem Minimum an Platzbedarf absorbiert wird, so dass die Gebrauchsfähigkeit einer im Verladebereich vorhandenen Bodenplatte sowie des abstürzenden Behälters erhalten bleibt. Dies wird dadurch erreicht, dass innerhalb des Aufnahmeraumes (3) mehrere energieabsorbierend und plastisch verformbar ausgebildete Stoßdämpfungselemente (4) in zumindest einer horizontalen Lage angeordnet sind, die von einer auf der Unterseite der Rahmenstruktur (2, 2a, 2b) angebrachten Bodenplatte (9) und von einer auf der Oberseite der Rahmenstruktur (2, 2a, 2b) angebrachten Abdeckplatte (10) gekapselt sind.

## Beschreibung

Die Erfindung richtet sich auf ein mobiles Dämpferelement für radioaktive Materialien enthaltende Behälter. Insbesondere richtet sich die Erfindung auf eine Stoßdämpfungsvorrichtung für Transport- und/oder Lagerbehälter von radioaktivem Material, die eine einen Aufnahmeraum umgrenzende Rahmenstruktur aufweist. Ebenso richtet sich die Erfindung auf eine Verwendung einer solchen Stoßdämpfungsvorrichtung beim Verladevorgang von Transport- und/oder Lagerbehälter von radioaktivem Material.

Bei dem Betrieb eines Kernkraftwerkes sowie nach Beendigung des Leistungsbetriebes des Kernkraftwerkes fallen bestrahlte Brennelemente an, die bis zu ihrer Ablieferung an eine Anlage zur Endlagerung radioaktiver Materialien zwischengelagert werden müssen. Aus diesem Grund werden sogenannte Zwischenlager errichtet und betrieben, in denen Behälter (Transport- und/oder Lagerbehälter), deren Eigenschaften den sicheren Einschluss des radioaktiven Materials gewährleisten, für einen bestimmten Zeitraum gelagert werden. Dabei werden die Behälter mit einem Transportfahrzeug von einem Reaktorgebäude des Kernkraftwerks zu dem Zwischenlager transportiert.

Die Beförderung radioaktiver Materialien ist üblicherweise durch umfangreiche atom- und verkehrsrechtliche Vorschriften geregelt, um den Schutz der Bevölkerung sowohl beim bestimmungsgemäßen Transport als auch bei eventuellen Transportunfällen zu gewährleisten. Dieses Schutzziel wird beim Transport von radioaktiven Materialien insbesondere durch die hohen Sicherheitsanforderungen an die hierbei verwendeten Behälter gewährleistet. Die Transport- und/oder Lagerbehälter sind sogenannte Typ-B-Verpackungen (unfallsichere Verpackungen). Aufgrund der Begrenzung der Fahrgeschwindigkeit des Transportfahrzeugs ist die Verwendung von Stoßdämpfern für die Behälter beim innerbetrieblichen Transport nicht erforderlich.

Die Behälter werden in einem als Lagerhalle ausgeführten Behälterlager stehend aufbewahrt. Das Behälterlager weist einen Verladebereich auf, über dessen gesamte Länge eine Krananlage verfahrbar ist, die den Transport der Behälter vom Transportfahrzeug zu jeder Abstellposition und umgekehrt ermöglicht. Die Handhabung der Behälter bei den Arbeiten zur Behälterannahme, zur Behältereinlagerung und zur Behälterauslagerung sowie bei notwendigen Wartungsarbeiten an den Behältern wird im Verladebereich durchgeführt. Während des Verladevorgangs eines Behälters wird dieser angehoben, wobei sich beim Anheben eine Hubhöhe von beispielsweise 3 m zwischen Behälterunterkante und Lagerhallenboden ergeben kann. Anschließend wird der Behälter entweder auf dem Transportfahrzeug abgesetzt oder aber in der Lagerhalle mittels der Krananlage verfahren, wobei das Verfahren der Behälter bei einer geringeren Hubhöhe von beispielsweise 0,25 bis 0,3 m erfolgt. Die größten mechanischen Einwirkungen erfährt der Behälter demzufolge während des Verladevorgangs im Fall eines unterstellten Absturzes aus dem Krangehänge.

Zum Schutz vor Beschädigungen im Fall eines unterstellten Behälterabsturzes sind sogenannte Bodenstoßdämpfer aus dem Stand der Technik bekannt. Beispielsweise weist bei einem solchen Bodenstoßdämpfer die Bodenplatte im Verladebereich eine mit Dämpferbeton ausgestattete Fläche auf, neben welcher das Transportfahrzeug während des Verladevorgangs der Behälter positioniert wird. Bei einem unterstellten Absturz des mit radioaktivem Material beladenen Behälters auf die Bodenplatte mit Dämpferbeton bleiben die Behälterdichtheit sowie Behälterintegrität und der sichere Einschluss des radioaktiven Materials erhalten. Die Verwendung des Dämpferbetons ist somit eine wirkungsvolle Maßnahme, um die mechanische Belastung des Behälters bei einem Fall aus einer Hubhöhe von beispielsweise 3 m zu reduzieren. Allerdings wird dabei die mit Dämpferbeton ausgestattete Fläche der Bodenplatte des Verladebereichs beschädigt und muss unter großem Kostenaufwand in Stand gesetzt werden, wobei auch der Behälter Beschädigungen infolge der auf ihn wirkenden Verzögerungskräfte aufweisen kann. Ferner ist die Auslegung einer Bodenplatte mit Dämpferbeton auf Behälter mit einem bestimmten Gewicht beschränkt, so dass bei schwereren oder leichteren Behältern eine effektive Minderung der Beschleunigungskräfte nicht mehr gewährleistet ist und die Gefahr einer Behälterbeschädigung besteht.

Aus diesem Grund ist es bekannt, für die Dauer des Verladevorgangs der Behälter im Verladebereich vor dem Transportfahrzeug eine als mobiler Bodenstoßdämpfer ausgebildete Stoßdämpfungsvorrichtung mit einem Stoßdämpfungselement aus feuerhemmend und feuerbeständig ummanteltem Holz vorzusehen. Diese Stoßdämpfungsvorrichtung muss allerdings ausreichend groß dimensioniert sein, um die bei einem unterstellten Behälterabsturz auftretende Energie zumindest teilweise aufzunehmen. Von Nachteil ist ferner, dass eine Dekontamination dieser Stoßdämpfungsvorrichtung nur schwer durchführbar ist. Darüber hinaus besteht ein wesentlicher Nachteil dieser Stoßdämpfungsvorrichtung mit Holz darin, dass sich die Dämpfungseigenschaften des Holzes aufgrund von Witterungseinflüssen (beispielsweise Feuchtigkeit) sowie aufgrund des natürlichen Alterungsprozesses des Holzes stark verändern, so dass die Stoßdämpfungsvorrichtung die ursprünglich ihr zugedachten Dämpfungseigenschaften nicht mehr aufweist.

Der Erfindung liegt die Aufgabe zu Grunde, eine Lösung für eine Stoßdämpfungsvorrichtung zu schaffen, die die Nachteile des Standes der Technik vermeidet und auf kostengünstige sowie konstruktiv einfache Weise die gesamte, bei einem Behälterabsturz auftretende Energie absorbiert, so dass die Gebrauchsfähigkeit des Behälters sowie einer im Verladebereich vorhandenen Bodenplatte bzw. des Bodens im Verladebereich erhalten bleiben.

Diese Aufgabe wird erfindungsgemäß durch eine Stoßdämpfungsvorrichtung der eingangs genannten Art gelöst, bei welcher innerhalb des Aufnahmeraumes mehrere energieabsorbierend und plastisch verformbar ausgebildete Stoßdämpfungselemente in zumindest einer horizontalen Lage angeordnet sind, die zwischen einer auf der Unterseite der Rahmenstruktur angebrachten Bodenplatte und einer auf der Oberseite der Rahmenstruktur angebrachten Abdeckplatte gekapselt sind.

Ebenso wird die Aufgabe erfindungsgemäß durch die Verwendung einer Stoßdämpfungsvorrichtung nach einem der Ansprüche 1 bis 15 als Bodenstoßdämpfer in Form einer mobilen Bodenplatte in einem Verladebereich eines Zwischen- und/oder Endlagers für Transport- und/oder Lagerbehälter oder in Form einer Stoßschutzkappe gelöst, die an Endbereichen von radioaktivem Material beinhaltenden Transport- und/oder Lagerbehältern anbringbar ist.

Vorteilhafte und zweckmäßige Ausgestaltungen und Weiterbildungen der Erfindung ergeben sich aus den Unteransprüchen.

Durch die Erfindung wird eine im Vergleich zum Stand der Technik konstruktiv einfach zu realisierende Möglichkeit einer Stoßdämpfungsvorrichtung geschaffen, die die bei einem unterstellten Behälterabsturz auftretende Energie soweit abmindert bzw. absorbiert, dass zum einen die auf den Behälter wirkenden Verzögerungskräfte soweit minimiert werden, dass die Dichtheit und Integrität des Behälters gewahrt bleibt, und dass zum anderen die Gebrauchsfähigkeit der Bodenplatte im Verladebereich erhalten bleibt. Die Dämpfungseigenschaften der Stoßdämpfungsvorrichtung unterliegen keinen auf die Vorrichtung einwirkenden Witterungseinflüssen und Alterungsprozessen, so dass die Vorrichtung konstante Dämpfungseigenschaften aufweist, die keinen zeitlichen oder äußeren Einflüssen unterliegen. Die erfindungsgemäße Stoßdämpfungsvorrichtung stellt einen auf schwere Behälter speziell abstimmbaren mobilen Bodendämpfer dar, der in seiner Herstellung kostengünstig ist. Die Vorrichtung wird lediglich für die Dauer des Be- und Entladevorgangs im Verladebereich eingesetzt und ist für eine einmalige Kräfteaufnahme bei einem unterstellten Behälterabsturz für eine bestimmte Behälterbeschleunigung (bestimmtes Behältergewicht in Verbindung mit einer festgelegten Absturzhöhe) ausgelegt. Somit wirkt im Fall eines eventuellen Behälterabsturzes die Stoßdämpfungsvorrichtung durch die plastische Verformung energieabsorbierend und mindert die Stoßkraft des abstürzenden Behälters. Im normalen Anlagenbetrieb hat die Stoßdämpfungsvorrichtung keine Funktion und wird beispielsweise mittels einer Krananlage aus dem Verladebereich weg transportiert, so dass es sich folglich um eine mobile Stoßdämpfungsvorrichtung handelt. Im Vergleich zu einer mit Dämpferbeton versehenen Bodenplatte, die lediglich für ein vorbestimmtes Behältergewicht ausgelegt ist, bietet die Erfindung die Möglichkeit, mehrere Stoßdämpfungsvorrichtungen, die auf unterschiedliche Behältergewichte abgestimmt sind, im Verladebereich vorzusehen. Die Lagerung von Behältern in einem dafür vorgesehenen Lager ist somit nicht mehr auf Behälter mit gleichem Gewicht beschränkt.

Eine konstruktiv einfach zu realisierende Möglichkeit zur Unterbringung der Stoßdämpfungselemente innerhalb des Aufnahmeraumes besteht in zweckmäßiger Weiterbildung der Erfindung darin, dass die Stoßdämpfungselemente in wenigstens zwei horizontalen Lagen schichtweise angeordnet sind, wobei die Stoßdämpfungselemente der untersten Lage unbefestigt auf der Bodenplatte aufliegen und zwischen den Stoßdämpfungselementen und der Rahmenstruktur ein Freiraum vorhanden ist.

Zur Erhöhung der Festigkeit der Rahmenstruktur ist in weiterer Ausgestaltung der Erfindung vorgesehen, dass innerhalb des Aufnahmeraumes zwischen den einzelnen Lagen der Stoßdämpfungselemente jeweils eine Zwischenplatte oder Zwischenfolie vorgesehen ist.

Um möglichst viele Stoßdämpfungselement in kompakter und platzsparender Weise innerhalb des Aufnahmeraumes unterzubringen, sieht die Erfindung in Weiterbildung vor, dass die Stoßdämpfungselemente in horizontalen Lagen wabenartig innerhalb des Aufnahmeraumes angeordnet sind.

Alternativ ist erfindungsgemäß vorgesehen, dass die einzelnen Lagen der Stoßdämpfungselemente kreuzförmig übereinanderliegend angeordnet sind. Dadurch wird verhindert, dass die Stoßdämpfungselemente im Fall eines Absturzes eines Transport- und/oder Lagerbehälters aufgrund des Behältergewichts seitlich nicht weggedrückt werden.

Die Erfindung sieht in zweckmäßiger Weiterbildung vor, dass die jeweiligen Lagen der Stoßdämpfungselemente unterschiedliche Stoßdämpfungseigenschaften aufweisen. Dadurch ist es möglich, dass die einzelnen Lagen die im Fall eines Absturzes eines Transport- und/oder Lagerbehälters auf die Stoßdämpfungsvorrichtung wirkenden Stoßkräfte unterschiedlich stark absorbieren. Natürlich können auch die Stoßdämpfungseigenschaften der einzelnen Stoßdämpfungselemente einer jeweiligen Lage (beispielsweise der von innen nach außen liegend angeordneten Stoßdämpfungselemente) variieren. Im Fall, dass das Stoßdämpfungselement ein rohrförmiger Körper ist, sind die Stoßdämpfungseigenschaften über den Rohrdurchmesser, über die Wanddicke des rohrförmigen Hohlkörpers und über das verwendete Material des Hohlkörpers definiert.

Ein besonders sicherer Zusammenhalt der einzelnen Stoßdämpfungselemente ist in weiterer Ausgestaltung der Erfindung dadurch gegeben, dass die Zwischenräume zwischen den einzelnen Stoßdämpfungselementen mit einem Schaumstoff ausgefüllt sind, was zusätzlich die energieabsorbierende Eigenschaft der Stoßdämpfervorrichtung erhöht. Beispielsweise können die Zwischenräume im Aufnahmeraum mit Polyurethan ausgefüllt werden.

Im Hinblick darauf, dass das Gesamtgewicht der Stoßdämpfungsvorrichtung möglichst gering sein sollte, ist es von Vorteil, wenn die Stoßdämpfungselemente als Hohlprofile, vorzugsweise als Aluminiumrohre, ausgebildet sind.

Besonders vorteilhaft ist es ferner, wenn das Verhältnis von Außendurchmesser zu Wandstärke eines jeweiligen Hohlprofils 20 bis 30, vorzugsweise 25, beträgt.

Die Stoßdämpfungseigenschaften können ferner dadurch erhöht werden, dass der jeweilige Hohlraum der Hohlprofile mit einem elastisch oder plastisch verformbaren Füll- oder Schaumstoff ausgefüllt ist. Denkbar ist hierzu beispielsweise wiederum die Verwendung von Polyurethan.

In weiterer Ausgestaltung der Erfindung ist vorgesehen, dass die Stoßdämpfungselemente einen runden oder eckigen Querschnitt aufweisen. Vorstellbar sind auch gemischte Querschnittsformen, d.h. rund-eckige Querschnittsformen, wobei diese Formen mit einem höheren Herstellungsaufwand und somit mit höheren Herstellungskosten verbunden sind.

Das Gesamtgewicht der Stoßdämpfungsvorrichtung kann ferner dadurch reduziert werden, indem die Rahmenstruktur aus einem Hohlprofil gebildet ist.

Die Erfindung sieht in weiterer Ausgestaltung vor, dass die Stoßdämpfungselemente untereinander verbunden sind und/oder an der Rahmenstruktur und/oder der Abdeckplatte und/oder der Bodenplatte befestigt sind.

Um die Mobilität der Stoßdämpfungsvorrichtung zu gewährleisten, so dass diese nur im Fall einer Behälterverladung im Verladebereich eingesetzt wird, ist ferner vorgesehen, dass mehrere Transportelemente an der Rahmenstruktur angebracht sind. Dadurch kann beispielsweise ein mehrsträngiges Kettengehänge mit den Transportelementen in Eingriff gebracht werden, so dass die Stoßdämpfervorrichtung von einer Krananlage zum Verladebereich hin und von diesem weg transportiert werden kann.

Schließlich sieht die Erfindung in weiterer Ausgestaltung vor, dass die Bodenplatte oder die Abdeckplatte zumindest ein Befestigungsmittel aufweist, durch welches die Stoßdämpfungsvorrichtung nach Art einer Stoßschutzkappe am Kopf- oder Fußbereich eines Transport- und/oder Lagerbehälters von radioaktivem Material anbringbar ist. Somit kann die erfindungsgemäße Stoßdämpfungsvorrichtung beim Verladen eines Transport- und/oder Lagerbehälters beispielsweise an dessen Fußbereich montiert und nach der Verladung vom Fußbereich wieder demontiert werden.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhaft ein bevorzugtes Ausführungsbeispiel der Erfindung dargestellt ist. In der Zeichnung zeigt:
Figur 1 in perspektivischer Darstellung eine mit einem Kettengehänge verbundene Stoßdämpfungsvorrichtung,
Figur 2 eine Draufsicht auf die Stoßdämpfungsvorrichtung,
Figur 3 eine Schnittansicht der Stoßdämpfungsvorrichtung entlang der Linie A-A in Figur 2 und
Figur 4 eine Schnittansicht der Stoßdämpfungsvorrichtung entlang der Linie B-B in Figur 3.

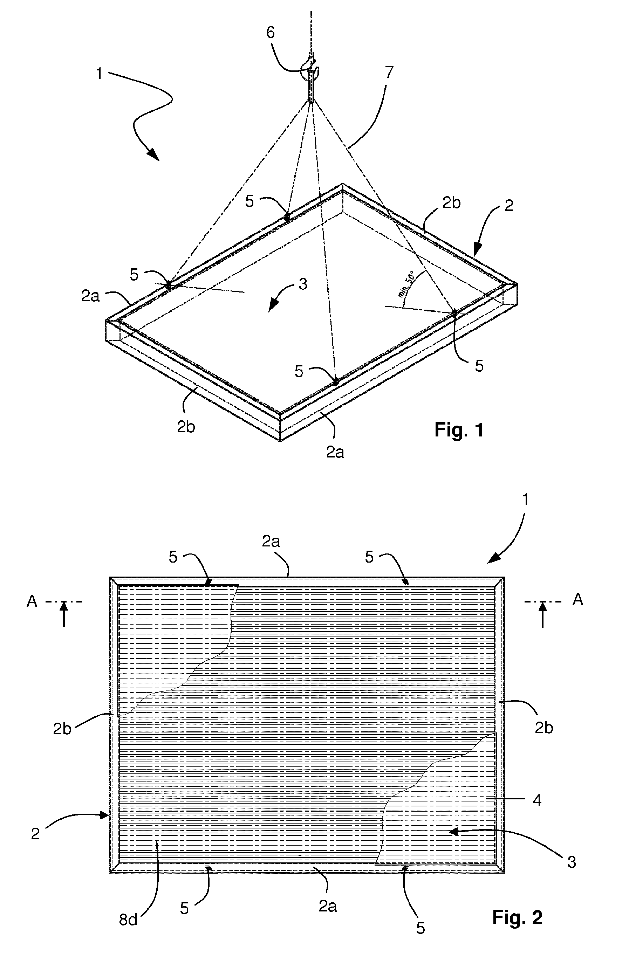

Die Figur 1 zeigt in perspektivischer Darstellung eine Stoßdämpfungsvorrichtung 1 für einen Behälter (Transport-und/oder Lagerbehälter), der zur Lagerung und zum Transport hochradioaktiver Materialien, zum Beispiel von Brennelementen oder hochradioaktiven Abfallprodukten (Glaskokillen) aus der Wiederaufarbeitung, dient. Die Stoßdämpfungsvorrichtung 1 weist eine Rahmenstruktur 2 auf, die vier Hohlprofile 2a, 2b, d.h. zwei Längsprofile 2a und zwei Querprofile 2b, aus warmgefertigtem Stahl umfasst. Die die Rahmenstruktur 2 bildenden Hohlprofile 2a, 2b sind an ihren jeweiligen Enden auf Gehrung geschnitten und nach Art eines bekannten Rahmens zusammengesetzt, beispielsweise durch Verschweißen. Die Rahmenstruktur 2 hat eine Grundfläche von etwa 300 cm x 400 cm bei einer Höhe von ca. 21 cm und umgrenzt einen Aufnahmeraum 3, in welchem eine Vielzahl von Stoßdämpfungselementen 4 angeordnet ist. Die beiden Längsprofile 2a der Rahmenstruktur 2 weisen jeweils zwei Transportelemente 5 in Form von Anschlagösen auf, die paarweise gegenüberliegend entlang des entsprechenden Längsprofils 2a beabstandet zueinander angeordnet sind, wie beispielsweise in Figur 2 zu erkennen ist. Die Transportelemente 5 sind mit einem an einem Kranhaken 6 eingehängten, 4-strängigen Kettengehänge 7 verbindbar, so dass die Stoßdämpfungsvorrichtung 1 mittels einer nicht dargestellten Krananlage in einem Verladebereich einer Lagerhalle für radioaktives Material beinhaltende Behälter mobil transportiert werden kann bzw. bewegbar ist. Dadurch ist es möglich, die mobile Stoßdämpfungsvorrichtung 1 während eines Verladevorgangs innerhalb eines Bereiches zu positionieren, in welchem ein von der Krananlage angehobener Behälter die größte Distanz zwischen der Unterkante seines Behälterbodens und der eigentlichen Bodenfläche aufweist. Beim Transport der mobilen Stoßdämpfungsvorrichtung 1 sollte der Winkel zwischen dem jeweiligen Strang des Kettengehänges 7 und der horizontalen Ebene der Rahmenstruktur 2 mindestens 50° betragen.

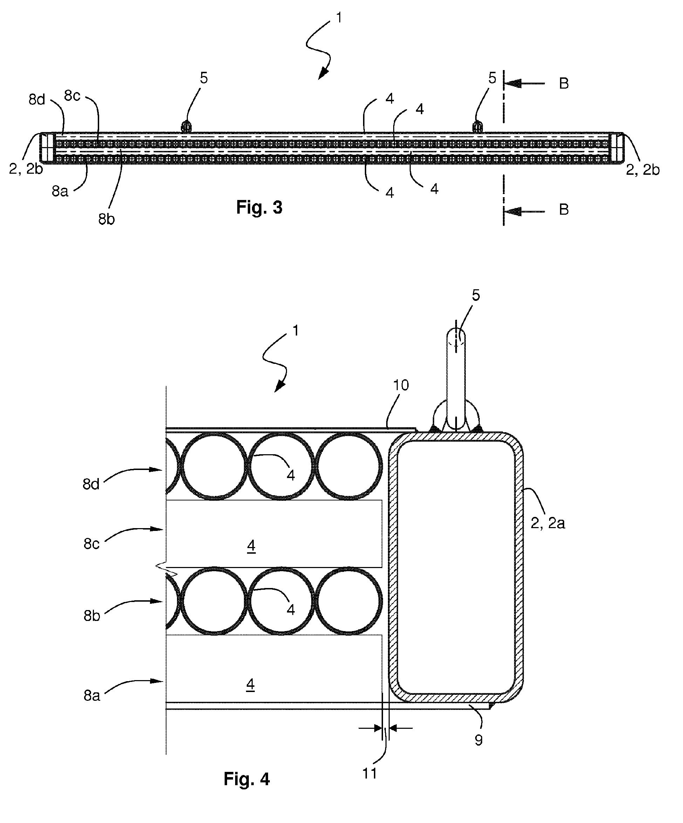

Die Stoßdämpfungselemente 4 sind innerhalb des Aufnahmeraumes 3 in zumindest einer horizontalen Lage nebeneinander liegend angeordnet. Wie insbesondere in den Figuren 3 und 4 zu sehen ist, umfasst die dargestellte Stoßdämpfungsvorrichtung 1 insgesamt vier horizontale Lagen 8a, 8b, 8c, 8d von Stoßdämpfungselementen 4, von denen in der Draufsicht in Figur 2 nur die oberste Lage 8d dargestellt ist. Die innerhalb des Aufnahmeraumes 3 angeordneten Stoßdämpfungselemente 4 sind von einer auf der Unterseite der Rahmenstruktur 2 angebrachten Bodenplatte 9 und von einer auf der Oberseite der Rahmenstruktur 2 angebrachten Abdeckplatte 10 gekapselt. Die Bodenplatte 9 mit einer Dicke von etwa 5 mm und die Abdeckplatte 10 mit einer Dicke von etwa 3 mm liegen auf der Unterseite bzw. der Oberseite der Rahmenstruktur 2 auf und sind umlaufend mit dieser verschweißt, so dass im Fall einer möglichen Kontamination nur die äußere Hülle, d.h. die Rahmenstruktur 2, die Bodenplatte 9 und die Abdeckplatte 10, nicht aber die Stoßdämpfungselemente 4 kontaminiert werden. Dadurch ist eine Dekontamination der Stoßdämpfungsvorrichtung 1 auf sehr einfache Weise möglich. Die Rahmenstruktur 2, die Bodenplatte 9 und die Abdeckplatte 10 bestehen aus einem nichtrostenden Stahl, wobei auch andere Materialien mit vergleichbaren Eigenschaften eingesetzt werden können.

Die schichtweise in den vier horizontalen Lagen 8a, 8b, 8c, 8d angeordneten Stoßdämpfungselemente 4 sind weder untereinander noch an der Rahmenstruktur 2 befestigt, wobei bei dem dargestellten Ausführungsbeispiel zwischen den Stoßdämpfungselementen 4 und der Rahmenstruktur 2 ein Freiraum 11 von etwa 5 mm vorhanden ist. Die Stoßdämpfungselemente 4 sind energieabsorbierend und plastisch verformbar ausgebildet, um im Fall eines Behälterabsturzes die auftretende Stoßkraft zu mindern, so dass die auftretende Behälterverzögerung beispielsweise Werte der 55-fachen oder 60-fachen Erdbeschleunigung nicht überschreitet. Mit Bezug auf die Figuren 3 und 4 sind die einzelnen horizontalen Lagen 8a, 8b, 8c, 8d der Stoßdämpfungselemente 4 kreuzförmig übereinanderliegend angeordnet. Alternativ zu der kreuzförmigen Anordnung der einzelnen horizontalen Lagen 8a, 8b, 8c, 8d der Stoßdämpfungselemente 4 können diese auch in horizontalen Lagen wabenartig innerhalb des Aufnahmeraums 3 angeordnet sein. Zusätzlich zu diesen beiden Möglichkeiten der Anordnung der einzelnen Lagen 8a, 8b, 8c, 8d der Stoßdämpfungselemente 4 ist es denkbar, dass innerhalb des Aufnahmeraums 3 zwischen den einzelnen horizontalen Lagen 8a, 8b, 8c, 8d der Stoßdämpfungselemente 4 jeweils eine Zwischenplatte oder eine Zwischenfolie vorgesehen ist, um die Festigkeit und Steifigkeit der Rahmenstruktur 2 zu erhöhen.

Die Eigenschaften zur Absorbierung der Stoßenergie bzw. die Stoßdämpfungseigenschaften der Stoßdämpfungsvorrichtung 1 ergeben sich aus der Auslegung der einzelnen Stoßdämpfungselemente 4. Die dargestellten Stoßdämpfungselemente 4 sind Aluminiumrohre, die jeweils einen kreisförmigen Querschnitt mit einem Außendurchmesser von 50 mm und einer Wandstärke von 2 mm aufweisen. Denkbar ist aber auch eine im Wesentlichen eckige Querschnittsform der Stoßdämpfungselemente 4, sowie sie die einzelnen Hohlprofile bzw. Längs- und Querprofile 2a und 2b der Rahmenstruktur 2 aufweisen. Die Stoßdämpfungseigenschaften der Stoßdämpfungsvorrichtung 1 können der Größe und dem Gewicht des Transport- und/oder Lagerbehälters von radioaktivem Material durch eine entsprechende Wahl des Rohrdurchmessers, der Wandstärke des Rohres und des verwendeten Materials der Stoßdämpfungselemente 4 angepasst werden, wobei der Transport-und/oder Lagerbehälter ein Gewicht von mehr als 100 t aufweisen kann, die es bei der Auslegung der Stoßdämpfungsvorrichtung 1 bzw. der Stoßdämpfungselemente 4 zu berücksichtigen gilt. Im vorliegenden Ausführungsbeispiel beträgt das Verhältnis von Außendurchmesser zu Wandstärke eines jeweiligen Stoßdämpfungselements 4 den Wert 25. Denkbar sind aber auch Verhältnisse in einem Bereich zwischen 20 und 30. Die in den horizontalen Lagen 8a, 8b, 8c, 8d nebeneinander angeordneten Hohlprofilrohre bzw. Stoßdämpfungselemente 4 bilden eine nachgiebige Stoßfläche. Dabei ist das Nachgiebigkeitsverhalten auch durch die Hohlraumverformung bzw. die Einfaltung der Profilhohlräume gekennzeichnet, wobei die Hohlraumverformung der Verformungsweg ist, den die Hohlprofile bei einem Einfalten oder Einknicken zurücklegen.

Um die Stoßdämpfungseigenschaften der Stoßdämpfungsvorrichtung 1 weiter zu erhöhen, können die Zwischenräume zwischen den einzelnen Stoßdämpfungselementen 4 mit einem Schaumstoff ausgefüllt sein. Darüber hinaus ist es denkbar, dass der jeweilige Hohlraum der als Hohlprofile ausgebildeten Stoßdämpfungselemente 4 mit einem elastisch oder plastisch verformbaren Füll- oder Schaumstoff ausgefüllt ist.

Die vorstehend beschriebene Stoßdämpfungsvorrichtung 1 kann ferner nicht dargestellte Befestigungsmittel aufweisen, durch welche sie nach Art einer bekannten Stoßschutzkappe am Kopf- und/oder Fußbereich eines Transport- und/oder Lagerbehälters von radioaktivem Material anbringbar ist. Demzufolge kann die Stoßdämpfungsvorrichtung 1 sowohl als Bodenstoßdämpfer in Form einer mobilen Bodenplatte in einem Verladebereich eines Zwischen- und/oder Endlagers für Transport- und/oder Lagerbehälter oder aber in Form einer an Endbereichen von Transport- und/oder Lagerbehältern anbringbaren Stoßschutzkappe verwendet werden.

Die beschriebene mobile Stoßdämpfungsvorrichtung 1 dient im Fall eines Behälterabsturzes dazu, sowohl den abstürzenden Behälter als auch den Boden im Verladebereich vor Beschädigungen zu schützen, wobei die Stoßdämpfungsvorrichtung 1 im Fall des Behälterabsturzes zerstört wird und anschließend für einen weiteren Gebrauch nicht mehr zu verwenden ist, sondern durch eine neue Stoßdämpfungsvorrichtung 1 zu ersetzen ist. Somit stellt die Erfindung eine Einweg-Stoßdämpfungsvorrichtung bereit, die kostengünstig herzustellen ist und die individuell dem Gewicht und der Größe der im Behälterlager gelagerten Behälter anpassbar ist, wobei die Stoßdämpfungsvorrichtung 1 auch als Stoßschutzkappe ausgebildet werden kann, die an dem Fuß- oder Kopfbereich eines Transport- und/oder Lagerbehälters anbringbar ist.

## Patentansprüche

1. Stoßdämpfungsvorrichtung (1) für Transport- und/oder Lagerbehälter von radioaktivem Material, die eine einen Aufnahmeraum (3) umgrenzende Rahmenstruktur (2, 2a, 2b) aufweist,
**dadurch gekennzeichnet, dass** innerhalb des Aufnahmeraumes (3) mehrere energieabsorbierend und plastisch verformbar ausgebildete Stoßdämpfungselemente (4) in zumindest einer horizontalen Lage (8a, 8b, 8c, 8d) angeordnet sind, die zwischen einer auf der Unterseite der Rahmenstruktur (2, 2a, 2b) angebrachten Bodenplatte (9) und einer auf der Oberseite der Rahmenstruktur (2, 2a, 2b) angebrachten Abdeckplatte (10) gekapselt sind.

2. Stoßdämpfungsvorrichtung (1) nach Anspruch 1, **dadurch gekennzeichnet, dass** die Stoßdämpfungselemente (4) in wenigstens zwei horizontalen Lagen (8a, 8b, 8c, 8d) schichtweise angeordnet sind, wobei zumindest die Stoßdämpfungselemente (4) der untersten Lage (8a) unbefestigt auf der Bodenplatte (9) aufliegen und zwischen den Stoßdämpfungselementen (4) und der Rahmenstruktur (2, 2a, 2b) ein Freiraum (11) vorhanden ist.

3. Stoßdämpfungsvorrichtung (1) nach Anspruch 1 oder 2,
**dadurch gekennzeichnet, dass** innerhalb des Aufnahmeraums (3) zwischen den einzelnen horizontalen Lagen (8a, 8b, 8c, 8d) der Stoßdämpfungselemente (4) jeweils eine Zwischenplatte oder Zwischenfolie vorgesehen ist.

4. Stoßdämpfungsvorrichtung (1) nach einem der Ansprüche 1 bis 3, **dadurch gekennzeichnet, dass** die Stoßdämpfungselemente (4) in horizontalen Lagen (8a, 8b, 8c, 8d) wabenartig innerhalb des Aufnahmeraumes (3) angeordnet sind.

5. Stoßdämpfungsvorrichtung (1) nach einem der Ansprüche 1 bis 3, **dadurch gekennzeichnet, dass** die einzelnen horizontalen Lagen (8a, 8b, 8c, 8d) der Stoßdämpfungselemente (4) kreuzförmig übereinanderliegend angeordnet sind.

6. Stoßdämpfungsvorrichtung (1) nach einem der vorhergehenden Ansprüche, **dadurch gekennzeichnet, dass** die jeweiligen horizontalen Lagen (8a, 8b, 8c, 8d) der Stoßdämpfungselemente (4) unterschiedliche Stoßdämpfungseigenschaften aufweisen.

7. Stoßdämpfungsvorrichtung (1) nach einem der vorhergehenden Ansprüche, **dadurch gekennzeichnet, dass** die Zwischenräume zwischen den einzelnen Stoßdämpfungselementen (4) mit einem Schaumstoff ausgefüllt sind.

8. Stoßdämpfungsvorrichtung (1) nach einem der vorhergehenden Ansprüche, **dadurch gekennzeichnet, dass** die Stoßdämpfungselemente (4) als Hohlprofile, vorzugsweise als Aluminiumrohre, ausgebildet sind.

9. Stoßdämpfungsvorrichtung (1) nach Anspruch 8, **dadurch gekennzeichnet, dass** das Verhältnis von Außendurchmesser zu Wandstärke eines jeweiligen Hohlprofils 20 bis 30, vorzugsweise 25, beträgt

10. Stoßdämpfungsvorrichtung (1) nach Anspruch 8 oder 9,
**dadurch gekennzeichnet, dass** der jeweilige Hohlraum der Hohlprofile mit einem elastisch oder plastisch verformbaren Füll- oder Schaumstoff ausgefüllt ist.

11. Stoßdämpfungsvorrichtung (1) nach einem der vorhergehenden Ansprüche, **dadurch gekennzeichnet, dass** die Stoßdämpfungselemente (4) eine runde oder eckige Querschnittsform aufweisen.

12. Stoßdämpfungsvorrichtung (1) nach einem der vorhergehenden Ansprüche, **dadurch gekennzeichnet, dass** die Rahmenstruktur (2, 2a, 2b) aus einem Hohlprofil gebildet ist.

13. Stoßdämpfungsvorrichtung (1) nach einem der vorhergehenden Ansprüche, **dadurch gekennzeichnet, dass** die Stoßdämpfungselemente (4) untereinander verbunden sind und/oder an der Rahmenstruktur (2, 2a, 2b) und/oder der Abdeckplatte (10) und/oder der Bodenplatte (9) befestigt sind.

14. Stoßdämpfervorrichtung (1) nach einem der vorhergehenden Ansprüche, **dadurch gekennzeichnet, dass** mehrere Transportelemente (5) an der Rahmenstruktur (2, 2a, 2b) angebracht sind.

15. Stoßdämpfungsvorrichtung (1) nach einem der vorhergehenden Ansprüche, **dadurch gekennzeichnet, dass** die Bodenplatte (9) oder die Abdeckplatte (10) zumindest ein Befestigungsmittel aufweist, durch welches die Stoßdämpfungsvorrichtung (1) nach Art einer Stoßschutzkappe am Kopf- oder Fußbereich eines Transport- und/oder Lagerbehälters von radioaktivem Material anbringbar ist.

16. Verwendung einer Stoßdämpfungsvorrichtung (1) nach einem der Ansprüche 1 bis 15 als Bodenstoßdämpfer in Form einer mobilen Bodenplatte in einem Verladebereich eines Zwischen- und/oder Endlagers für radioaktives Material beinhaltende Transport- und/oder Lagerbehälter oder in Form einer Stoßschutzkappe, die an Endbereichen von radioaktivem Material beinhaltenden Transport- und/oder Lagerbehältern anbringbar ist.
